# FASCICULE DE BREVET EUROPEEN

(11) **EP 0 721 018 B1**
(45) Date de publication et mention de la délivrance du brevet: **08.12.1999**
(21) Numéro de dépôt: 93913031.6
(22) Date de dépôt: 22.06.1993
(51) Int. Cl.: C22C 1/05, F16D 23/04

(54) **MATERIAU DE FRICTION POUR SYSTEMES TRIBOLOGIQUES LUBRIFIES**
REIBUNGSMATERIAL ZUR VERWENDUNG IN GESCHMIERTEN TRIBOLOGISCHEN SYSTEMEN
FRICTION MATERIAL FOR LUBRICATED TRIBOLOGICAL SYSTEMS

(30) Priorité: 22.06.1992 FR 9207564
(43) Date de publication de la demande: 10.07.1996
(73) Titulaire: SINTERMETAL, S.A., E-08291 Ripollet (Barcelona) (ES)
(72) Inventeur: ROMERO FERNANDEZ, Antonio, E-08340 Vilassar de Mar (ES); BELAIR, Pascal, F-86230 Orches (FR); GHAEM MAGHAM FARAHNI, Seyed Hamid Reza, F-92160 Antony (FR)
(74) Mandataire: SUGRANES - VERDONCES - FERREGÜELA
(86) Numéro de dépôt international: ES9300052
(87) Numéro de publication internationale: WO9400609

(56) Documents cités:
- EP-A- 0 407 596
- WO-A-92/14853
- DE-A- 2 354 826
- DE-A- 3 808 460
- FR-A- 2 207 193

## Description

La présente invention concerne une pièce en matériau de friction destiné à être utilisé dans un système tribologique lubrifié et, plus particulièrement, mais non uniquement, pour la fabrication d'anneaux de synchroniseurs utilisés dans les boites de vitesse manuelles.

La conception des matériaux pour les boites de vitesses est soumise à de nombreuses exigences dont certaines sont contradictoires entre elles. D'une part, il est nécessaire d'avoir une lubrification efficace au niveau des engrenages, c'est-à-dire un coefficient de frottement aussi réduit que possible entre les parties en contact. D'autre part, pour les synchroniseurs, il est nécessaire d'obtenir un coefficient de frottement qui soit élevé et qui soit constant, indépendamment en particulier, de la température, de la vitesse et de la pression de contact.

Pour les anneaux de synchroniseurs, on cherche, de préférence, à éviter la formation d'un coin d'huile ou à obtenir la rupture d'un film d'huile en créant soit des irrégularités géométriques par usinage de rainures ou similaires, soit des hétérogénités plus fines en utilisant un matériau non homogène, en particulier un matériau composé d'une matrice relativemente tendre dans laquelle sont incluses des particules de dureté supérieure.

Un matériel de ce genre est décrit dans WO-A-92/14853, se référant à un matériel macro-composé, et à son procédé de fabrication, notamment applicable aux pièces résistantes à la fatigue thermique et à l'usure, pour outils de coupe, et qui comprennent une matrice en acier allié à des îles de poudres de carbures de T, W, Ti, Ni, Hf, V et Si.

Dans FR-2207193 est décrit un procédé de préparation d'une matière composite de portée résistant à l'usure, par dépôt par pulvérisation dans un plasma ou dans une flamme ou par détonation, d'un mélange de particules formant une phase dure les particules ayant une dimension comprise entre environ 0,05 et 100 micrométres, et étant présentes en une fraction volumique comprise entre environ 3 et 50%, associées à un métal ductile.

Les études poursuivies ont abouti à la conclusion que de tels matériaux pouvaient cependant donner des résultats acceptables, pour un prix relativement peu élevé, si des conditions particulières sont accomplies.

Un autre problème résulte du fait que dans les boites de vitesse modernes, les lubrifiants haute pression contiennent certains additifs de type borates ou sulfates, qui sont destinés à diminuer le coefficient de frottement sur les engrenages et qui peuvent réagir sur la matière des anneaux de synchroniseurs.

L'invention a donc pour but de fournir un matériau de friction qui permette d'éliminer l'inconvénient et problèmes mentionnés et qui permette d'obtenir un coefficient de frottement important, peu dépendant des circonstances d'utilisation, et avec lequel on puisse obtenir des pièces de formes complexes à faible coût.

Pour obtenir ce résultat, l'invention fournit une pièce de friction destiné à être utilisé dans un système tribologique lubrifié, constitué d'une pièce frittée ou d'une part d'une pièce frittée en matériau de friction formée d'une matrice métallique en bronze comprenant entre 5 à 40% en poids de particules dures en acier incluses dans ladite matrice métallique, au moins 90% desdites particules dures ayant une taille comprise entre 50 et 300 micromètres et une dureté supérieure à 600 HV 0,1, lesdites particules dures conservant leur dureté sensiblement constante pendant la phase opérative d'un système tribologique lubrifié contenant ledit matériau de friction, et lesdites particules ayant une surface passivable par réaction dans le système tribologique, et étant formées par un acier comprenant au moins un composé choisi dans le groupe constitué de carbures de Cr, Mo, W et V; de nitrures de Al et Mo; et d'oxydes de Cr, Ni, Zr et Ti, tout cela de façon qu'elles ont une surface passivable par réaction dans le système tribologique en présence d'un lubrifiant de haute pression contenant un additif extrême pression choisi parmi les borates et les sulfates.

Par surface passivable, on entend une surface qui donne naissance, dans le milieu considéré, à une couche d'oxyde étanche et continue qui constitue une barrière entre la matière et son environnement.

### Exemples

Les tableaux ci-après donnent le résultat de 23 essais qui permettent de comparer les résultats d'échantillons conformes à l'invention avec divers témoins. Les essais ont été obtenus en testant sur un tribomètre des échantillons cylindriques de 3 mm de diamètre, dont les caractéristiques sont décrites au tableau 1. Le tribomètre est du type pion disque équipé pour assurer la lubrification du contact, tout en permettant de modifier la température, la pression du contact, et la vitesse de rotation du disque.

Les coefficients de frottement sont déterminés à partir des forces de frottement mesurées sur le tribomètre. Les vitesses de glissement choisies ont varié entre 0,34 m/s, qui correspond, selon la technique actuelle, à un régime de lubrification limite (coefficient de frottement > à 0,1) ou mixte (coefficient de frottement compris entre 0,1 et 0,03), et 1,7 m/s, qui correspond, selon la technique habituelle, à des régimes de lubrification hydrodynamiques (coefficient de frottement > à 0,03).

Les essais numéros 1 à 3 ont été conduits avec des échantillons usinés à partir de barres de laiton riches en silicium. Cette composition est celle utilisée habituellement pour la fabrication d'anneaux de synchroniseurs utilisés dans les boites de vitesse manuelles. Lors de l'essai numéro 3, l'échantillon avait été usiné pour présenter des rainures de 0,5 mm de hauteur avec une largeur au sommet et en fond de rainure de 0,2 mm. Les échantillons de l'essai numéro 4 ont été obtenus par projection à chaud d'une couche de molybdène sur un substrat en laiton.

Les échantillons des essais 5 à 7 sont constitués d'une matrice en bronze. Le graphite et le fer présents dans la matrice interviennent comme modificateurs de friction. Cette métallurgie est utilisée couramment pour la réalisation de matériaux de friction frittés.

Les échantillons des essais 8 et 12 ont été réalisés pour traiter les propriétés de friction du molybdène lorsqu'il se trouve sous forme d'inclusion dans une matrice ductile. Les échantillons des essais 9 et 23 ont été réalisés pour tester les propriétés de friction de la matrice de bronze seule.

Les échantillons des essais 10, 11, 19 et 21 présentent des inclusions riches en chrome, mais de dureté inférieure à celle qui est décrite dans l'invention. Ces échantillons servent de point de comparaison avec l'essai 18.

Les échantillons des essais 13, 14 et 16 à 18 correspondent à l'invention, avec des pourcentages d'inclusions de 5, 15 et 20%. Ils ont été fabriqués selon le procédé classique de la métallurgie des poudres (compression et frittage d'un mélange de poudres).

Les échantillons de l'essai 15 sont identiques à ceux de l'essai 14, à part le fait qu'ils présentent après usinage des rainures de 0,3 mm de hauteur, avec une largeur au sommet et en fond de rainure de 0,2 mm.

Les échantillons de l'essai 20 correspondent également à l'invention mais contiennent des inclusions présentant des teneurs différentes en éléments d'alliage, et donc des duretés différentes. Les échantillons de l'essai 22 présentent la même composition que pour ceux de l'essai 18, mais avec une taille de particules plus faible et en dehors des limites spécifiées selon l'invention.

On a observé, notamment lors de l'essai 14, que la surface frottante ne montre aucune trace d'interaction du lubrifiant avec les inclusions, contrairement au bronze, lequel présente, après les essais, une coloration importante de sa surface. La comparaison des essais 14 et 15 montre que la présence de rainures, si elle apporte une légère amélioration au frottement, peut être supprimée sans problème.

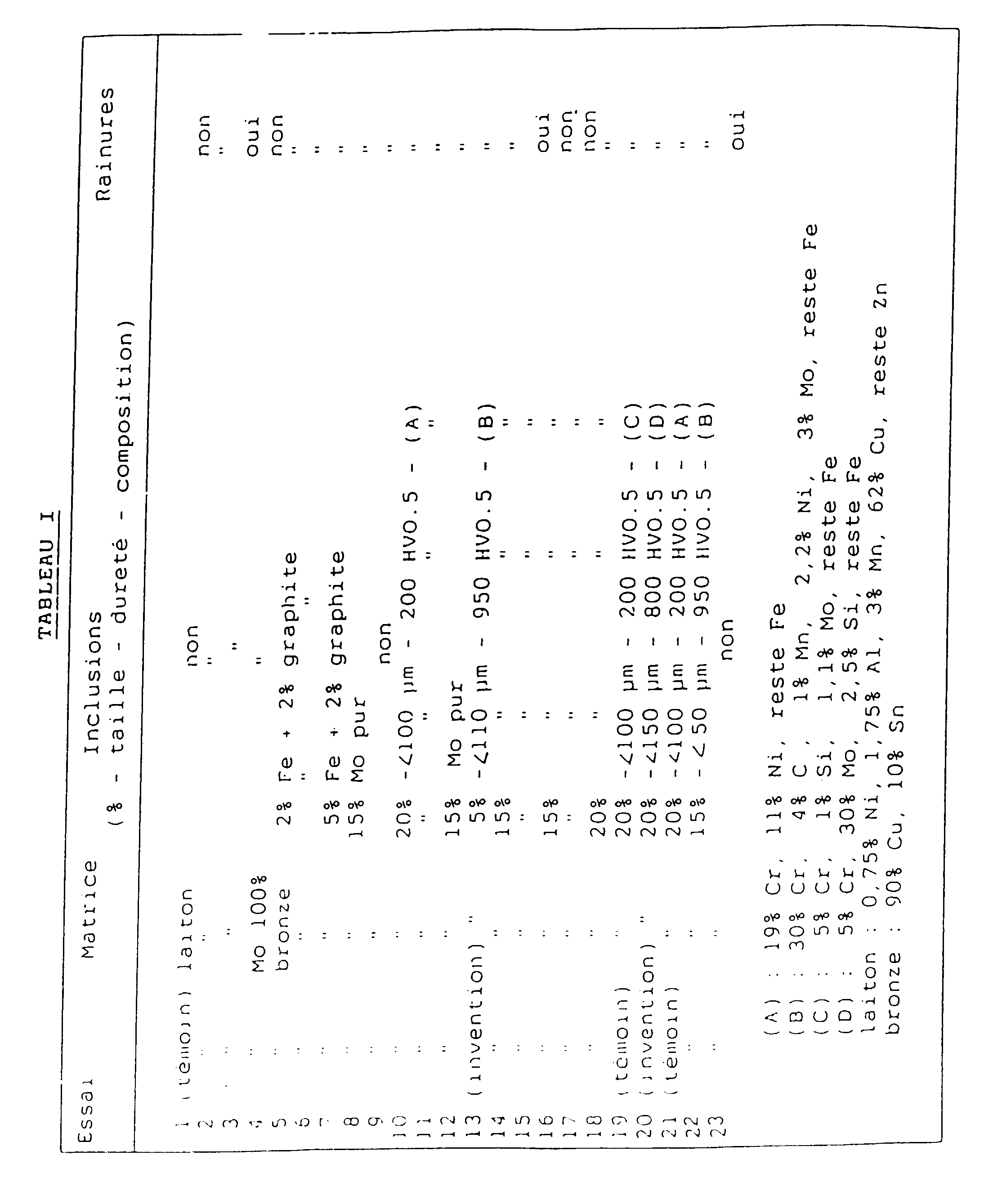

**TABLEAU II**

| essai | temp. °C | pression MPa | vitesse | |
|---|---|---|---|---|
| | | | 0.34 m/s | 1.7 m/s |
| 1 | 20 | 80 | 0. 080 | 0.015 |
| 2 | 80 | 90 | 0.125 | 0.115 |
| 3 | 20 | 80 | 0.125 | 0.115 |
| 4 | 10 | 80 | 0.115 | 0.100 |
| 5 | 20 | 56 | 0.065 | 0.035 |
| 6 | 20 | 90 | 0.070 | 0.030 |
| 7 | 20 | 56 | 0.055 | 0.025 |
| 8 | 20 | 90 | 0.075 | 0.030 |
| 9 | 20 | 11 | 0.080 | 0.015 |
| 10 | 20 | 90 | 0.085 | 0.050 |
| 11 | 80 | 56 | 0.115 | 0.090 |
| 12 | 20 | 56 | 0.075 | 0.030 |
| 13⁽⁺⁾ | 20 | 56 | 0.085 | 0.070 |
| 14⁽⁺⁾ | 20 | 56 | 0.105 | 0.095 |
| 15⁽⁺⁾ | 20 | 11 | 0.115 | 0.105 |
| 16⁽⁺⁾ | 80 | 56 | 0.100 | 0.087 |
| 17⁽⁺⁾ | 120 | 56 | 0.112 | 0.096 |
| 18⁽⁺⁾ | 20 | 56 | 0.125 | 0.106 |
| 19 | 20 | 56 | 0.070 | 0.040 |
| 20⁽⁺⁾ | 20 | 56 | 0.120 | 0.115 |
| 21 | 20 | 56 | 0.010 | 0.025 |
| 22 | 20 | 56 | 0.080 | 0.060 |
| 23 | 20 | 56 | 0.115 | 0.095 |

| | | | | |
|---|---|---|---|---|
| (+) essai conforme à l'invention | | | | |

## Revendications

1. Pièce de friction destiné à être utilisé dans des systèmes tribologiques lubrifiés, constitué d'une pièce frittée ou d'une part d'une pièce frittée en matériau de friction, formée d'une matrice métallique en bronze comprenant entre 5 à 40% en poids de particules dures en acier incluses dans ladite matrice métallique, au moins 90% desdites particules dures ayant une taille comprise entre 50 et 300 micromètres et une dureté supérieure à 600 HV 0,1, lesdites particules dures conservant leur dureté sensiblement constante pendant la phase opérative d'un système tribologique lubrifié contenant ledit matériau de friction, et lesdites particules ayant une surface passivable par réaction dans le système tribologique et etant formées par un acier comprenant au moins un composé choisi dans le groupe constitué de carbures de Cr, Mo, W et V; de nitrures de Al et Mo; et d'oxydes de Cr, Ni, Zr et Ti, tout cela de façon qu'elles ont une surface passivable par réaction dans le système tribologique en présence d'un lubrifiant de haute pression contenant un additif extrême pression choisi parmi les borates et les sulfates.

## Patentansprüche

1. Reibungserzeugnis, das für die Verwendung in geschmierten tribologischen Systemen bestimmt ist, gebildet aus einem gesinterten Erzeugnis oder einem Teil eines gesinterten Erzeugnisses aus einem Reibungsmaterial, das aus einem metallischen Grundmaterial aus Bronze mit 5 bis 40 Gewichtsprozent in dem metallischen Grundmaterial enthaltenen harten Stahlteilchen gebildet ist, wobei wenigstens 90% der harten Teilchen eine Größe zwischen 50 und 300 µm und eine Härte größer als 600 HV 0,1 haben, die harten Teilchen ihre Härte während des Betriebs eines geschmierten tribologischen Systems, das dieses Reibungsmaterial enthält, im wesentlichen konstant halten, und die Teilchen eine Oberfläche haben, die durch Reaktion in dem tribologischen System passivierbar ist, und aus einem Stahl mit wenigstens einer Verbindung gebildet sind, die aus der durch die Karbide von Cr, Mo, W und V, die Nitride von Al und Mo und die Oxyde von Cr, Ni, Zr und Ti gebildete Gruppe ausgewählt ist, damit sie eine Oberfläche haben, die durch Reaktion in dem tribologischen System bei Vorliegen eines Hochdruckschmiermittels, das ein unter den Boraten und den Sulfaten ausgewähltes Extremdruck-Additiv enthält, passivierbar ist.

## Claims

1. Friction component designed to be used in lubricated tribological systems, consisting of a sintered component or of a part of a sintered component made of a friction material, formed of a metal matrix made of bronze containing between 5 to 40 % by weight of hard steel particles included in the said metal matrix, at least 90 % of the said hard particles having a size of between 50 and 300 micrometres and a hardness greater than 600 HV 0.1, the said hard particles keeping their hardness substantially constant during the operative phase of a lubricated tribological system containing the said friction material, and the said particles having a surface which can be rendered passive by reaction in the tribological system and being formed of a steel containing at least one compound chosen from the group consisting of the carbides of Cr, Mo, W and V; nitrides of Al and Mo; and oxides of Cr, Ni, Zr and Ti, all this so that they have a surface which can be rendered passive by reaction in the tribological system in the presence of a high-pressure lubricant containing an extreme-pressure additive chosen from borates and sulfates.
